# EUROPEAN PATENT SPECIFICATION

(11) **EP 3 687 953 B1**
(45) Date of publication and mention of the grant of the patent: **30.08.2023**
(21) Application number: 18768912.0
(22) Date of filing: 19.09.2018
(51) Int. Cl.: C04B 28/06, C04B 28/14, C04B 28/16, C04B 40/00, C04B 103/52

(54) **RETARDER FOR CALCIUM SULFOALUMINATE BELITE CEMENT**
VERZÖGERER FÜR CALCIUM-SULFOALUMINAT-BELIT-ZEMENT
RETARDATEUR POUR CIMENT DE SULFOALUMINATE DE CALCIUM CONTENANT DE LA BÉLITE

(30) Priority: 28.09.2017 EP 17193826
(43) Date of publication of application: 05.08.2020
(73) Proprietor: Heidelberg Materials AG, 69120 Heidelberg (DE)
(72) Inventor: BOLTE, Gerd, 69190 Walldorf (DE); WORTMANN, Kai, 37603 Holzminden (DE)
(74) Representative: Zellentin & Partner mbB Patentanwälte
(86) International application number: PCT/EP2018/075309
(87) International publication number: WO 2019/063378

(56) References cited:
- GB-A- 2 347 415
- US-A- 4 084 981
- US-A- 4 286 992
- US-A1- 2003 233 961
- US-A1- 2013 133 554

## Description

The present invention relates to a retarder for calcium sulfoaluminate belite cements.

Calcium sulfoaluminate cements (CSA) and binders containing them have gained increasing attention lately, especially ones containing also considerable amounts of belite, ferrite and/or ternesite. Since manufacturing Portland cement (OPC) releases considerable amounts of CO₂ and also requires high amounts of energy, alternative binders are sought for. CSA is one such alternative. Recent developments on CSA are numerous and mostly propose optimized compositions, see e.g. US 2011/0073013 A1, US 2012/0085265 A1 and US 9,073,784 B2. One main improvement results from the presence of belite. Although these calcium sulfoaluminate belite cements (CSAB) and binders therefrom show great promise, there are still obstacles to replace OPC with them. A comparison of typical compositions of OPC and CSAB is presented in table 1 below.

**Table 1**

| | **Chem. Composition [%]** | **Miner. Composition [%]** |
|---|---|---|
| OPC | CaO [55-75] | C₃S [50-70] |
| | SiO₂ [15-25] | C₂S [10-40] |
| | Al₂O₃ [2-6] | C₃A [0-15] |
| | Fe₂O₃ [0-6] | C₄AF [0-20] |
| | SO₃ [1.5-4.5] | C$ [2-10] |
| | | C [0-3] |
| | | Cc [0-5] |
| CSAB | CaO [40-70] | C₂S [2-70] |
| | SiO₂ [2-40] | C₄A₃$ [10-75] |
| | Al₂O₃ [5-40] | C₄AF [0-30] |
| | Fe₂O₃ [0-15] | C$ [5-30] |
| | SO₃ [5-25] | Secondary phases |

One problem with CSAB cements is the control of setting times. The setting times of CSAB cements used as binders in mortar or concrete depend on their ye'elimite content and the amount and reactivity of the added calcium sulphate. The formation of ettringite from ye'elimite and sulfate is very fast and results in a loss of workability of the mortar or concrete. To slow down the reaction and provide sufficient workability, a retarder needs to be added. For CSA binders a number of retarders have been proposed, mainly carboxylic acids and mixtures containing them, see US 2003/0233961 A1 and references cited therein. The main problem to be solved by a retarder in CSA cements is to retard the formation of ettringite without impairing the development of compressive strength. In CSAB cements the additional problem arises to maintain the reactivity of the belite. Consequently it is an object to provide a retarder for ettringite formation that maintains reactivity of belite and compressive strength development in CSAB cements.

Surprisingly it was now found that a combination of aminopolycarboxylic acids or their salts with carboxylic acids or their salts can retard the ettringite formation and associated setting while maintaining belite reactivity and strength and, thus, solves the problem.

Thus, the present invention achieves the object by using a combination of an aminopolycarboxylic acid or salt thererof with a carboxylic acid or salt thererof as retarder for CSAB cements; by a method of retarding the setting of CSAB cement pastes by adding a combination of an aminopolycarboxylic acid or salt thererof with a carboxylic acid or salt thererof to the cement or mortar or concrete and by providing a CSAB binder with controlled setting comprising CSAB cement obtained from a CSAB clinker containing at least 20 % by weight belite and a combination of at least one aminopolycarboxylic acid or salt thererof with at least one carboxylic acid or salt thererof.

So as to simplify the description the following abbreviations that are usual in the field of cement are used herein: H - H₂O, C - CaO, A - Al₂O₃, F - Fe₂O₃, M - MgO, S - SiO₂ and $ - SO₃. Compounds are mostly named in the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

Belite is used here as a term for several types of dicalcium silicate such as, but not limited to, β-C₂S, γ-C₂S, x-C₂S, and different types of α-C₂S. Typically, belite is present in several polymorphs in clinkers like OPC and CSAB and forms complex solid solutions by incorporating foreign elements. These solid solutions are also included in the term belite. Ye'elimite designates the phase C₄A₃$ including especially forms wherein Al is substituted by iron also in substantial amounts of up to 80 % substitution.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Within the scope of the present invention, clinker refers to a sintered product, which is obtained by burning a raw materials mixture at elevated temperature, and which contains at least one hydraulically reactive phase. Cement refers to a clinker that is ground with or without the addition of calcium sulfate (C$) or of further components or mixed with separately ground calcium sulfate. A binder or binder mixture refers to a hydraulically hardening mixture containing a cement and additional finely ground constituents e.g. as specified in EN 197, and which is used following the addition of water, as well as optionally admixtures and aggregate.

Further, a cement or binder may contain mineral additions, which are often industrial by-products used to replace parts of the clinker during cement production. Their addition aims at saving energy and primarily raw material resources. These materials often contribute to the mechanical performance of the final product, because of their pozzolanic or latent hydraulic reactivity and are designated supplementary cementitious materials (SCM) then. Another typical mineral addition is limestone which is not reactive.

The term "acid/salt" is used herein as abbreviation for anyone of the acid form, the salt form or a mixture of the acid and salt form of a chemical.

The present invention provides a retarder for CSAB cements that is effective, does not impair strength and can consist of substances without environmental problems. Both aminocarboxylic acids/salts and carboxylic acids/salts are known that are easily biodegradable and do not have adverse effects like being carcinogenic or harmful to the environment, e.g. toxic for fish or insects or plants. Novel CSAB cement formulations can be sufficiently retarded by using a combination of an aminopolycarboxylic acid or its salt with a carboxylic acid or its salt in a broad combination and dosage range.

The retarder used according to the invention comprises at least one aminopolycarboxylic acid or its salt in combination with at least one carboxylic acid or its salt, e.g. a monocarboxylic acid, dicarboxylic acid, tricarboxylic acid or hydroxy carboxylic acid or their salts. The carboxylic acid only contains carbon, hydrogen, and oxygen atoms in its molecule. The carboxylic acid generally has 2 to 8 carbon atoms, preferably 2 to 6, including those of the carboxylic acid/carboxylate groups. The carboxylic acid salts include, but are not limited to, lithium, sodium, potassium, magnesium and calcium salts. In the case of polycarboxylic acids one or more carboxyl groups can be in the salt form, and also different cations are possible, e.g. for tartaric acid the salt KNaC₄H₄O₆. All substances can also be used with any number of molecules of crystal water or in anhydrous form, unless expressly otherwise specified the mentioning of a substance includes any number of molecules of crystal water and none. Preferred carboxylic acids or their salts are citric acid, tartaric acid, oxalic acid, potassium sodium tartrate, and sodium acetate.

Aminopoly carboxylic acid denotes a chemical compound containing one or more amino groups, i.e. having a nitrogen atom bound to a carbon atom, and more than one carboxylic acid group in its molecule. Preferred aminopolycarboxylic acids or their salts are ethylenediamine-tetraacetic acid, disodium salt of diethylenetriamine-pentaacetic acid, ethylenediamine-dihydroxyphenylacetic acid, tetrasodium-iminodisuccinate, and mixtures thereof.

A preferred dosage for the retarder mixture ranges from 0.01 to 5 %, more preferred from 0.05 to 3 % and most preferred from 0.1 to 1.5 %, each by weight and with respect to the total weight of the dry cement. With respect to dosages dry cement herein means the CSAB including any added C$. The weight ratio of aminopolycarboxylic acid or its salt to carboxylic acid or its salt ranges from 1:3 to 3:1, e.g. about 1:2, about 3:5, about 1:1, about 2:1, or about 5:3, wherein a ratio of 1:1 is not always the optimum. The effectiveness of each specific substance is different and depends inter alia on its ability to chelate calcium. In the present invention tartaric acid was found to be more effective than citric acid, for example. One of ordinary skill in the art can easily determine the optimal dose for the specific substance combination and application and adapt it to the requirements.

CSAB cements and binders are known as such and commercially available, e.g. as follows:

### Lafarge Aether^{®}:

| | | | |
|---|---|---|---|
| belite (α; +/-β) C₂S | 40 - 75 %; | ye'elimite C₄A₃$ | 15 - 35 %; |
| ferrite C₂(A,F) | 5-25 %; | secondary phases | 0.1 - 10 % |

### Italcementi Alipre^{®}:

| | | | |
|---|---|---|---|
| belite (α; +/-β) C₂S | 10 - 25 %; | ye'elimite C₄A₃$ | 50 - 65 %; |
| anhydrite C$ | 0 - 25 %; | secondary phases | 1 - 20 % |

### Cemex CSA:

| | | | |
|---|---|---|---|
| belite (α; +/-β) C₂S | 10 - 30 %; | ye'elimite C₄A₃$ | 20 - 40 % |
| anhydrite C$ | > 1 %; | alite C₃S | > 1 - 30 %; |
| free lime CaO | < 0.5 - 6 %; | portlandite Ca(OH)₂ | 0 - 7 %; |
| secondary phases | 0 - 10 % | | |

### Denka^{®} CSA

| | | | |
|---|---|---|---|
| belite (α; +/-β) C₂S | 0 - 10 %; | ye'elimite C₄A₃$ | 15 - 25 %; |
| anhydrite C₂(A,F) | 30-40%; | portlandite Ca(OH)₂ | 20 - 35 %; |
| free lime CaO | 1 - 10 %; | secondary phases | 0 - 10 % |

### China Type II & III CSA

| | | | |
|---|---|---|---|
| belite (α; +/-β) C₂S | 10 - 25 %; | ye'elimite C₄A₃$ | 60 - 70 %; |
| ferrite C₂(A,F) | 1 - 15 %; | secondary phases | 1 - 15 % |

### Barnstone CSA

| | | | |
|---|---|---|---|
| belite (α; +/-β) C₂S | 22 %; | ye'elimite C₄A₃$ | 60 %; |
| aluminate C₁₂A₇ | 5 %; | alite C₃S | 8 %; |
| ferrite C₂(A,F) | 4 %; | secondary phases | 1 % |

Typically, the CSAB clinker from which the CSAB cement contained in the binder according to the invention is obtained comprises
10 to 80 % by weight ye'elimite, preferably 20 to 70 % by weight,
20 to 70 % by weight belite, preferably 30 to 60 % by weight,
0 to 30 % by weight ferrite, preferably 5 to 20 % by weight,
0 to 30 % by weight ternesite, preferably 0 to 20 % by weight,
0 to 15 % by weight minor components, preferably 0 to 5 % by weight
wherein all components in one specific clinker add up to 100 %. Minor
components designates trace components and componets present in low amounts (typically below 5 %, but sometimes also up to 10 or 15 %) which are derived from raw materials, fuel, refractories or other plant materials. They can also result from the addition of fluxes and mineralizers added to affect the reactions of clinker formation or the properties of the product. Fluxes and mineralizers usually enhance melt formation and/or the formation of specific phases or lower the required temperature. Fluxes and mineralizers can also be present in raw materials. Typical minor components (often also designated secondary phases or minor phases) in CSAB clinker are aluminates, free lime, periclase, ellestadite, calcite, and XRD amorphous phases.

If not present in the CSAB clinker in the desired amount, calcium sulfate is added, e.g. as anhydrite or dihydrate or mixtures thereof, to obtain the CSAB cement. The useful amount in the final cement is up to 15 % by weight, preferably up to 10 % by weight, with respect to the total cement weight.

Usually, the clinker is ground together with the calcium sulfate to obtain the cement. A separate grinding of the constituents and mixing afterwards is possible as well.

A preferred fineness of the cement, with or without calcium sulfate, is according to the determination of the particle size distribution by laser granulometry, d₉₀ ≤ 90 µm and preferably d₉₀ ≤ 60 µm, whereby the Rosin Ramler Parameter (slope) n can vary from 0.6 -1.4, and preferably from 0.7 to 1.2.

Besides the retarder according to the invention other admixtures and additives may be added to binder, concrete, mortar etc. made of the cement, for example but not limited to dispersants, defoaming agents, air-entraining agents, water reducing agents, superplasticizers, pigments, and any mixture of two or more of the mentioned admixtures and additives. If admixtures or additives are added they are used in the amounts known per se and adjusted according to need as usual.

In one embodiment the CSAB binder contains only CSAB cement and optionally admixtures and/or additives, i.e. the CSAB cement is the only hydraulically reactive component.

The CSAB cements can also be used in blends with any constituents specified in EN 197, like Portland cement clinker, limestone, ground granulated blast furnace slag (GGBS), siliceous fly ash, calcareous fly ash, burnt shale, and other latent hydraulic and/or pozzolanic materials. If such constituents are added to the CSAB cement they are used in the appropriate fineness, i.e. ground. It is also possible to add constituents, which are not ground or not ground fine enough, to the CSAB clinker and grind them together with the clinker. Preferred amounts of these further constituents are as follows: latent hydraulic materials such as GGBS from 0 to 35 % by weight, mineral fillers like limestone or other rock flour from 0 to 20 % by weight, pozzolanic materials like siliceous fly ash and natural pozzolans from 0 to 35 % by weight, Portland cement clinker from 0 to 35 % by weight. Preferably, the reactive components of the binder (CSAB, Portland cement clinker, latent hydraulic material, pozzolanic material) contain at least 70 % by weight CSAB cement, preferably at least 80 % by weight, most preferred at least 90 % by weight.

In one embodiment the early compressive strength of the CSAB is enhanced by adding an alkali metal sulphate, for example sodium sulfate. A suitable dosage ranges from 0.1 to 5.0 % by weight with respect to dry cement

In one embodiment the early compressive strength of the CSAB is enhanced by adding an alkali metal carbonate, e.g. lithium carbonate. The dosage is typically in the range from 0.005 to 0.1 % by weight, preferably from 0.01 to 0.05 % by weight, with respect to dry cement

It is also possible to combine a alkali metal sulphate and a alkali metal carbonate, the dosages remain as stated.

The set-retarded CSAB according to the invention can be used to replace OPC in all known paste, mortar or concrete applications, for example in ready mix concrete, cast-in-place concrete, repair mortar, precast concrete, earth-dry concrete, self levelling floor screed and for shotcrete application. Typically, the binder will be mixed with water and aggregate for use. When using the retarder according to the invention, the water/cement-ratio (w/c) may have to be adjusted. Often a w/c of 0.6 or lower is suitable, whereas the ususal ratio is between 0.4 and 0.5.

The retarder used according to the invention can be prepared as an admixture for addition to mortar or concrete. The retarder can also be included in the dry cement or binder formulation. It can be added to the clinker befor milling, or to the mill or at any time thereafter. It can be added at any stage of the processing of the cement or binder, also when batching concrete or mortars. In one embodiment the aminocarboxylic acid/salt is added to the clinker before or during grinding and the carboxylic acid/salt is added later.

The method according to the invention includes providing in a CSAB cement, binder or paste the retarder combination used according to the invention and allows an adjustment of setting time without impairing the development of compressive strength. Typically, compressive strength measured after 28 days equals or surpasses that of the same CSAB without the added retarder combination.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred featurest that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a compositin does not comprise a particular material, i.e. the compostion comprises 0 weight percent of such material.

### Examples

In the examples the retarders shown in the following table 2 were used, market products were tested, too. The abbreviations used in the following are also listed in table 2.

**Table 2**

| | |
|---|---|
| A | Calcium sulfate anhydrite, CaSO₄ |
| KNaT | Potassium sodium tartrate tetrahydrate, KNaC₄H₄O₆ · 4H₂O |
| TAc | Tartaric acid, HO₂CCH(OH)CH(OH)CO₂H used form: (2R,3R)-(+)-Tartaric acid |
| AAc | Sodium acetate, CH₃COONa |
| OAc | Oxalic acid dihydrate C₂H₂O₄ • 2H₂O |
| CAc | Citric acid monohydrate, C₆H₈O₇ • 1H₂O |
| EDTA | Ethylenediaminetetraacetic acid disodium salt dihydrate, C₁₀H₁₄N₂Na₂O₈ • 2H₂O |
| CX1F | Baypure CX 100 Fest, tetrasodium iminodisuccinate |
| NaS | Sodium sulfate, Na₂SO₄ |

### Example 1

A CSAB clinker was ground and blended with 4% by weight of a ground calcium sulphate anhydrite (> 94% CaSO₄) to control the hydration reaction of ye'elimite. The obtained cement, according to particle size distribution determination by laser granulometry, had a d₉₀ at 69 µm and a Rosin-Rammler-Parameter n (slope) of 0.80. The phase composition of the obtained CSAB binder was measured by XRD and is provided in table 3.

**Table 3**

| phase | formula | amount [% by weight] |
|---|---|---|
| Belite, C₂S | Ca₂SiO₄ | 40.0 |
| Aluminate, C₃A | Ca₃Al₂O₆ | 0.62 |
| Ferrite, C₄AF | Ca₂(Al, Fe)₂O₅ | 3.71 |
| Mayenite, C₁₂A₇ | Ca₁₂Al₁₄O₃₃ | 1.03 |
| Merwinite | Ca₃Mg(SiO₄)₂ | 1.34 |
| Akermanite-Gehlenite | Ca₂MgSi₂O₇ - Ca₂Al₂SiO₇ | 1.96 |
| Bredigite | Ca₁₄Mg₂(SiO₄)₈ | 3.51 |
| Free lime, C | CaO | 0.31 |
| Periclase, M | MgO | 2.06 |
| Anhydrite | CaSO₄ | 3.96 |
| Bassanite | CaSO₄ • 0.5 H₂O | 0.00 |
| Gypsum | CaSO₄ • 2 H₂O | 0.00 |
| Ca-Langbeinite | K₂Ca₂(SO₄)₃ | 1.03 |
| Ellestadite | Ca₁₀(SiO₄)₃(SO₄)₃F₂ | 5.67 |
| Ye'elimite | Ca₄Al₆O₁₂SO₄ | 24.1 |
| Quartz | SiO₂ | 0.21 |
| Maghemite | Fe₂O₃ | 0.52 |
| Calcite | CaCO₃ | 1.34 |
| XRD amorphous | | 8.56 |

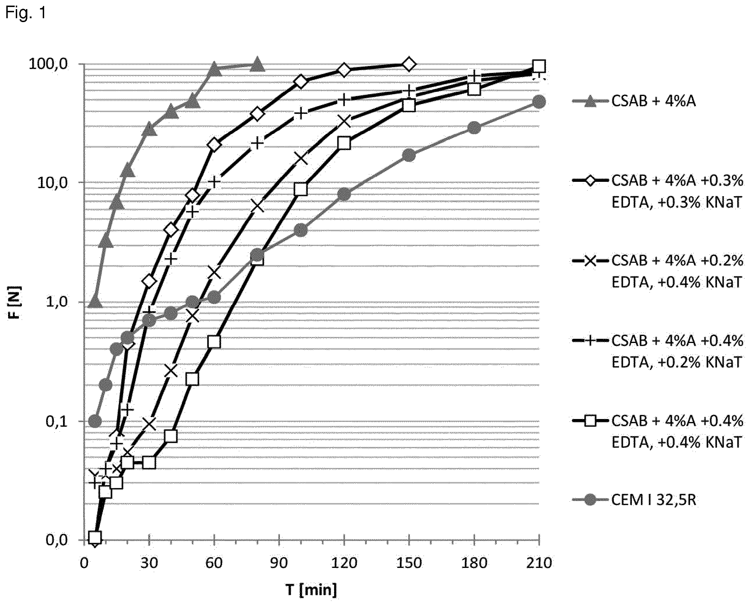

A paste was prepared by mixing the binder with 40% water (w/c = 0.40). 5 Minutes after mixing the plasticity was measured with a Penetrometer (PNR20 from Coesfeld) by measuring the force needed to penetrate a needle (d=3 mm) into the paste. The higher the needed force for penetration, the lower the workability. The results are presented in figure 1. It can be seen that the time until penetration needs a high force for the binder without retarder (CSAB + 4%A) indicating the workability is very low and setting time is very short. The workability and setting time could be adjusted by using mixtures of EDTA and potassium sodium tartrate. For some retarder combinations used the workability was even better than that of an exemplary CEM I 32.5R (OPC), measured for comparison.

### Example 2

The same CSAB clinker as in example 1 was blended with either 4 % or 10 % of calcium sulfate anhydrite (>94 % CaSO₄). The obtained cement with 4 % calcium sulfate anhydrite, according to particle size distribution determination by laser granulometry, had a d₉₀ of 69 µm and a Rosin-Rammler-Parameter n (slope) of 0.80. The cement with 10 % calcium sulfate anhydrite had a d₉₀ of 66.7 µm and a Rosin-Rammler-Parameter n (slope) of 0.72. The water demand and setting times were measured according EN 196-3 for each retarder combination in table 4. The results are presented in table 4. Samples retarded according to the invention are designated "in..." and those for comparison "C..." in the table. The kind and amount of retarder (by weight relative to the total dry cement weight) is given in the second column, the indication in brackets characterizes the binder. Where nothing is indicated the cement was the one stated in the table title.

**Table 4a: binder with 4 % anhydrite**

| sample | retarder used (Mixture) | water demand [%] | intial setting time [min] | final setting time [min] |
|---|---|---|---|---|
| C1 | none (CSAB + 4 % A) | 44.0 | 3 | 7 |
| C2 | 0.5% TAc | 30.5 | 7 | 16 |
| C3 | 0.8% TAc | 29.5 | 22 | 29 |
| C4 | 0.5% EDTA | 27.0 | 12 | 17 |
| C5 | 0.8% EDTA | 26.5 | 24 | 29 |
| In1 | 0.4% EDTA + 0.2 % TAc | 26.5 | 37 | 46 |
| In2 | 0.4% EDTA + 0.4 % TAc (CSAB+4%A + 1 % Na₂SO₄) | 27.0 | 36 | 46 |
| In3 | 0.5% CX1F + 0.3 % AAc, | 29.5 | 35 | 50 |

**Table 4b: binder with 10 % anhydrite**

| sample | retarder used (Mixture) | water demand [%] | intial setting time [min] | final setting time [min] |
|---|---|---|---|---|
| C6 | none (CSAB + 10% A) | 32.0 | 11 | 15 |
| In4 | 0.3 % EDTA + 0.3 % TAc | 26.5 | 50 | 60 |
| In5 | 0.3 %CX1F + 0.5 % AAc | 29.5 | 20 | 40 |
| C7 | 0.5 % AAc + 0.3 %OAc | 30.5 | 25 | 50 |
| C8 | 0.8 % CAc | 26.0 | 20 | 29 |

The results show that the pure CSAB + 4 % anhydrite without retarder added shows a very short setting time. High water demand indicates that the paste starts to set already during mixing. An increased amout of anhydrite improved the workability and retarded the setting, but only slightly. The retarder works independently. Using one chemical substance (e.g. tartrate, EDTA) alone provided only a minor retarding effect, but in combination according to the invention the time until setting is significantly extended.

### Example 3

The same CSAB cement was used as in example 1. Retarders with different ratio of aminopolycarboxylic acid to carboxylic acid salt were added and mortars were prepared for compressive strength measurement according EN196-1 after 1, 2, 7, and 28 days, by mixing the cement with 50 % water (w/c = 0.50). A CEM I 32.5R (Portland cement), a CEM III/A 32.5N (Blastfurnace cement, containing 50 % GGBS), a CEM II/A-S 42.5R (Portland slag cement, containing 16 % GGBS), and a CEM II/A-LL 42.5R (Portland limestone cement, containing 13 % limestone) were tested as references. In one sample the effect of adding sodium sulfate was examined. In another the effect of adjusted (reduced) w/c ratio was examined. The w/c was adapted to get a spread flow after 15 min close to that of the OPC based reference binders. The results of the measurements are listed in table 5.

**Table 5**

| Sample | retarder used (Mixture) | w/c | Spread flow 15 min. [mm] | Compressive strength [MPa] | | | |
|---|---|---|---|---|---|---|---|
| | | | | 1d | 2d | 7d | 28 d |
| C9 | none (CEM I 32.5R) | 0.50 | 176 | 8 | 19 | 39 | 50 |
| C10 | none (CEM III/A 32.5N) | 0.50 | 184 | 4 | 9 | 25 | 49 |
| C11 | none (CEM II/A-S 42.5R) | 0.50 | 178 | 12 | 24 | 44 | 58 |
| C12 | none (CEM II/A-LL 42.5R) | 0.50 | 181 | 18 | 31 | 51 | 59 |
| C1 | none (CSAB + 4 %A) | 0.50 | 145 | 21 | 24 | 28 | 31 |
| In6 | 0.3 % EDTA + 0.3 % KNaT | 0.50 | 246 | 5 | 13 | 22 | 29 |
| In6a | 0.3 % EDTA + 0.3 % KNaT | **0.40** | 185 | 12 | 31 | 54 | 60 |
| In7 | 0.2 % EDTA + 0.4 % KNaT | 0.50 | 225 | 6 | 17 | 26 | 30 |
| In8 | 0.4 % EDTA + 0.2 % KNaT | 0.50 | 230 | 4 | 10 | 24 | 30 |
| In9 | 0.4 % EDTA + 0.4 % KNaT | 0.50 | 256 | 3 | 9 | 24 | 31 |
| In10 | 0.4 % EDTA + 0.4 % KNaT (CSAB+4%A + 1.0 % NaS) | 0.50 | 241 | 12 | 22 | 33 | 41 |

The results show that the pure CSAB without retarder had an insufficient workability (low spread flow). Although it had the highest early strength after 1 day, after 2 days not much further strength was developed. The retarders used according to the invention increased the workability. Although they decreased early strength a bit that was recovered within 7 days and at 28 days the same strength was achieved as that of the binder without retarder. It is noted that the strength of the retarded binders according to the invention was up to 2 days comparable to that of the reference CEM I 32.5R and even higher than the CEM III/A 32.5N. Therefrom the strength level of the CEM III/A 32.5N was achieved even after 7 days. By the addition of sodium sulfate the strength development improved significantly. The 28 day strength was significantly higher than that of the CSAB without any retarder. It is noted that the strength of the retarded binders in combination with sodium sulfate was up to 2 days significantly above the CEM I 32,5R and close to that of the reference CEM II/A-S 42.5R. Therefrom the strength after 7 days was significantly above the CEM III/A 32.5N. The adjusted w/c ratio likewise resulted in a extreme strength increase. In that case the compressive strength reached that of the CEM II/A-LL 42.5R.

### Example 4

Further measurements were made comparing different retarders and using the same CSAB clinker as in the previous examples. However, the CSAB clinker was co-ground with 4 % anhydrite on plant scale. The obtained cement, according to particle size distribution determination by laser granulometry, had a d₉₀ of 59 µm and a Rosin-Rammler-Parameter n (slope) of 0.69. Paste and Mortar experiments were performed at a constant w/c-ratio of 0.40, since the added retarders showed a strong influence on consistency. Experiments with a w/c of 0.50 provided too fluent mixtures in many cases. Setting times were measured following EN 196-3, strength according to EN 196-1, and the workability was tested by means of the "Hägermann Ausbreittisch" according to DIN EN 1015-3. Tables 6a to 6c present the results.

**Table 6a: Setting**

| sample | retarder used (Mixture) | initial [min.] | final [min.] |
|---|---|---|---|
| C1b | none (CSAB + 4%A) | 50 | 74 |
| In11 | 1.0% CX1F + 0.3% AAc | 135 | 165 |
| C13 | 1.0%CX1F | 140 | 155 |
| C4b | 0.5% EDTA | 105 | 150 |
| C14 | 0.5% OAc | 115 | 135 |

**Table 6b: Workability**

| sample | retarder used (Mixture) | spread flow [mm] after | | |
|---|---|---|---|---|
| | | 10 Min. | 45 Min. | 90 Min. |
| C1b | none (CSAB + 4 %A) | 102 | set | set |
| In11 | 1.0 % CX1F + 0.3 % AAc | 214 | 190 | 159 |
| C13 | 1.0 % CX1F | 216 | 187 | 151 |
| C4b | 0.5 % EDTA | 125 | 104 | 100 |
| C14 | 0.5 % OAc | 143 | 114 | 100 |

**Table 6c: Compressive strength**

| sample | retarder used (Mixture) | Compressive strength [MPA] after | | | | |
|---|---|---|---|---|---|---|
| | | 1d | 2d | 3d | 7d | 28d |
| C1b | none (CSAB + 4 %A) | 29.8 | 34.3 | 36.8 | 41.5 | 49.4 |
| In11 | 1.0 % CX1F + 0.3 % AAc | 20.8 | 29.3 | 30.4 | 40.3 | 49.2 |
| C13 | 1.0 % CX1F | 21.6 | 31.3 | 33.7 | 42.4 | 50.4 |
| C4b | 0.5 % EDTA | 17.0 | 30.1 | 36.2 | 42.0 | 48.4 |
| C14 | 0.5 % OAc | 29.8 | 34.3 | 35.8 | 42.1 | 50.2 |

The experiments show that the method of retarding according to the invention is able to ensure sufficient setting delay without impairing compressive strength when the w/c ratio is adapted appropriately.

### Example 5

Concrete experiments were made with a concrete base mix comprising 380 kg/m³ binder as described in example 4, 60 kg/m³ fly ash, and 1760 kg/m³ aggregate. Target was to produce a concrete which has a plastic consistency 45 minutes after mixing. A CSAB binder without retarder was compared with a retarded CSAB binder according to the invention. The retarded CSAB according to the invention, containing a combination of 1 % tetrasodiumiminodisuccinate plus 0.3 % sodium acetate, needed only 0.8 % BV 3M (ligninsulfonate (water reducing agent) from SIKA) as plastizer and 182 kg/m³ water to have a flow spread after 45 minutes of 540 mm. A not retarderd CSAB was not showing a comparable consistency even with a high amount of plastiziser of 1.2 % BV 3M and 1.6 % FM6 (melamine/naphthalene sulfonate (plasticizer) from SIKA) as admixtures and 202 kg/m³ water. The not retarded CSAB provided a flow spread a45 of 300 mm. Thus, the effectiveness of the retardation according to the invention has also been shown in concrete. It is noted that the compressive strength of the retarded CSAB was 13.6 MPA after 1 day and 32.8 MPa after 28 days, i.e. comparable to a CSAB without retarder.

The examples demonstrate on paste and mortar properties that a sufficient retardation of CSAB is achieved, without significant influence on strength performance when using the retarder combination according to the invention.

## Claims

1. Use of a combination of an aminopolycarboxylic acid or salt thererof with a carboxylic acid having only carbon, hydrogen, and oxygen atoms in its molecule or salt thererof as retarder for calcium sulfoaluminate belite cements.

2. Use according to claim 1, wherein the aminopolycarboxylic acid or salt is ethylenediamine-tetraacetic acid, diethylenetriamine-pentaacetic acid, ethylenediamine-dihydroxyphenylacetic acid, tetrasodium-iminodisuccinate, or any mixture of two or more thereof.

3. Use according to claim 1 or 2, wherein the carboxylic acid or salt thereof is a carboxylic acid or carboxylate with 2 to 8 carbon atoms, preferably 2 to 6 carbon atoms, including those of the carboxylic acid/carboxylate groups.

4. Use according to one of claims 1 to 4, wherein the carboxylic acid salt is a lithium, sodium, potassium, magnesium, and/or calcium salt.

5. Use according to one of claims 1 to 3, wherein the carboxylic acid or salt thereof is citric acid, tartaric acid, oxalic acid, potassium sodium tartrate, sodium acetate, or any mixture of two or more thereof.

6. Use according to one of claims 1 to 5, wherein a dosage for the retarder mixture ranges from 0.01 to 5 %, more preferred from 0.05 to 3 % and most preferred from 0.1 to 1.5 %, each by weight and with respect to the total weight of the dry cement.

7. Use according to one of claims 1 to 6, wherein a weight ratio of the aminopolycarboxylic acid or salt thereof to the carboxylic acid or salt thereof ranges from 1:3 to 3:1.

8. Use according to one of claims 1 to 7, wherein the calcium sulfoaluminate belite clinker from which the calcium sulfoaluminate belite cement is obtained comprises:
10 to 80 % by weight ye'elimite, preferably 20 to 70 % by weight
20 to 70 % by weight belite, preferably 30 to 60% by weight
0 to 30 % by weight ferrite, preferably 5 to 20% by weight
0 to 30 % by weight ternesite, preferably 0 to 20% by weight
0 to 15 % by weight minor components, preferably 0 to 5 % by weight
each with respect to the total clinker weight.

9. Use according to one of claims 1 to 8, wherein calcium sulfate is added as anhydrite or dihydrate or mixtures thereof, in an amount to provide up to 15 % by weight, preferably up to 10 % by weight, in the cement with respect to the total cement weight.

10. Use according to one of claims 1 to 9, wherein further admixtures and/or additives are included, preferably one or any mixture of two or more of dispersants, defoaming agents, air-entraining agents, water reducing agents, superplasticizers, pigments, fillers, and fibers.

11. Use according to one of claims 1 to 10, wherein the calcium sulfoaluminate belite cement is blended with Portland cement, ground Portland cement clinker, limestone, or any mixture thereof.

12. Use according to one of claims 1 to 11, wherein the calcium sulfoaluminate belite cement is blended with supplementary cementitious materials like industrial by-products which are contributing by a pozzolanic or latent hydraulic reaction, preferably ground granulated blast furnace slag, fly ash, burnt oil shale, or any mixture thereof.

13. Use according to one of claims 1 to 12, wherein an alkali metal sulphate, for example sodium sulfate, is added in an amount from 0.1 to 5.0 % by weight with respect to cement.

14. Use according to one of claims 1 to 13, wherein an alkali metal carbonate, e.g. lithium carbonate, is added in an amount from 0.005 to 0.1 % by weight, preferably from 0.01 to 0.05 % by weight, with respect to cement.

15. Use according to one of claims 1 to 14, wherein the retarder is added to the calcium sulfoaluminate belite clinker before or during grinding or wherein the retarder is added to the calcium sulfoaluminate belite cement before or during mixing with water.

16. Use according to one of claims 1 to 14, wherein the aminocarboxylic acid or salt is added to the calcium sulfoaluminate belite clinker before or during grinding and the carboxylic acid or salt is added after grinding.

17. Method of retarding the setting of calcium sulfoaluminate belite binder, mortar or concrete comprising adding a combination of an aminopolycarboxylic acid or salt thererof with a carboxylic acid having only carbon, hydrogen, and oxygen atoms in its molecule or salt as a retarder to a calcium sulfoaluminate belite cement according to the use of anyone of claims 1 to 16.

18. Method according to claim 17, wherein the retarder used is prepared as an admixture for addition to a mortar or a concrete or the retarder is included in the dry binder.

19. Method according to claim 17, wherein the retarder used is added to the calcium sulfoaluminate belite clinker before or during grinding.

20. Method according to claim 17, wherein the aminocarboxylic acid or salt is added to the calcium sulfoaluminate clinker before or during grinding and the carboxylic acid or salt is added after grinding.

21. Calcium sulfoaluminate belite binder with controlled setting comprising at least 70 % by weigth of a calcium sulfoaluminate belite cement obtained from a calcium sulfoaluminate belite clinker containing at least 20 % by weight belite and a combination of at least one aminopolycarboxylic acid or salt thererof with at least one of a carboxylic acid having only carbon, hydrogen, and oxygen atoms in its molecule or salt thererof used as retarder according to one of claims 1 to 16.

## Patentansprüche

1. Verwendung einer Kombination einer Aminopolycarbonsäure oder eines Salzes davon mit einer Carbonsäure, die nur Kohlenstoff-, Wasserstoff- und Sauerstoffatome in ihrem Molekül hat, oder eines Salzes davon als Verzögerer für Calciumsulfoaluminat-Belit-Zemente.

2. Verwendung gemäß Anspruch 1, wobei es sich bei der Aminopolycarbonsäure oder deren Salz um Ethylendiamintetraessigsäure, Diethylentriaminpentaessigsäure, Ethylendiamindihydroxyphenylessigsäure, Tetranatriumiminodisuccinat oder ein beliebiges Gemisch aus zwei oder mehreren davon handelt.

3. Verwendung gemäß Anspruch 1 oder 2, wobei die Carbonsäure oder ihr Salz eine Carbonsäure oder ein Carboxylat mit 2 bis 8 Kohlenstoffatomen, vorzugsweise 2 bis 6 Kohlenstoffatomen, einschließlich derjenigen der Carbonsäure/Carboxylatgruppen, ist.

4. Verwendung gemäß einem der Ansprüche 1 bis 4, wobei das Carbonsäuresalz ein Lithium-, Natrium-, Kalium-, Magnesium- und/oder Calciumsalz ist.

5. Verwendung gemäß einem der Ansprüche 1 bis 3, wobei es sich bei der Carbonsäure oder deren Salz um Zitronensäure, Weinsäure, Oxalsäure, Kaliumnatriumtartrat, Natriumacetat oder eine beliebige Mischung aus zwei oder mehreren davon handelt.

6. Verwendung gemäß einem der Ansprüche 1 bis 5, wobei die Dosierung der Verzögerermischung im Bereich von 0,01 bis 5 %, vorzugsweise von 0,05 bis 3 % und besonders bevorzugt von 0,1 bis 1,5 % liegt, jeweils nach Gewicht und bezogen auf das Gesamtgewicht des trockenen Zements.

7. Verwendung gemäß einem der Ansprüche 1 bis 6, wobei das Gewichtsverhältnis der Aminopolycarbonsäure oder deren Salz zur Carbonsäure oder deren Salz im Bereich von 1:3 bis 3:1 liegt.

8. Verwendung gemäß einem der Ansprüche 1 bis 7, wobei der Calciumsulfoaluminat-Belit-Klinker, aus dem der Calciumsulfoaluminat-Belit-Zement erhalten wird, umfasst:
10 bis 80 Gew.-% Ye'elimit, vorzugsweise 20 bis 70 Gew.-%
20 bis 70 Gew.-% Belit, vorzugsweise 30 bis 60 Gew.-%
0 bis 30 Gew.-% Ferrit, vorzugsweise 5 bis 20 Gew.-%
0 bis 30 Gew.-% Ternesit, vorzugsweise 0 bis 20 Gew.-%
0 bis 15 Gew.-% Nebenbestandteile, vorzugsweise 0 bis 5 Gew.-%,
jeweils bezogen auf das Klinkergesamtgewicht.

9. Verwendung gemäß einem der Ansprüche 1 bis 8, wobei Calciumsulfat als Anhydrit oder Dihydrat oder Mischungen davon in einer Menge zugegeben wird, die bis zu 15 Gew.-%, vorzugsweise bis zu 10 Gew.-%, im Zement, bezogen auf das Gesamtgewicht des Zements, ergibt.

10. Verwendung gemäß einem der Ansprüche 1 bis 9, wobei weitere Zusatzmittel und/oder Zusatzstoffe enthalten sind, vorzugsweise eines oder eine beliebige Mischung aus zwei oder mehr von Dispergiermitteln, Entschäumern, Luftporenbildnern, Verflüssigern, Fließmitteln, Pigmenten, Füllstoffen und Fasern.

11. Verwendung gemäß einem der Ansprüche 1 bis 10, wobei der Calciumsulfoaluminat-Belit-Zement mit Portlandzement, gemahlenem Portlandzementklinker, Kalkstein oder einer beliebigen Mischung davon gemischt wird.

12. Verwendung gemäß einem der Ansprüche 1 bis 11, wobei der Calciumsulfoaluminat-Belit-Zement mit Klinkerersatzmaterialien wie industriellen Nebenprodukten, vorzugsweise Hüttensand, Flugasche, gebrannter Ölschiefer oder eine Mischung davon, gemischt wird, die durch eine puzzolanische oder latenthydraulische Reaktion einen Beitrag leisten.

13. Verwendung gemäß einem der Ansprüche 1 bis 12, wobei ein Alkalimetallsulfat, beispielsweise Natriumsulfat, in einer Menge von 0,1 bis 5,0 Gew.-%, bezogen auf den Zement, zugegeben wird.

14. Verwendung gemäß einem der Ansprüche 1 bis 13, wobei ein Alkalicarbonat, z.B. Lithiumcarbonat, in einer Menge von 0,005 bis 0,1 Gew.-%, vorzugsweise 0,01 bis 0,05 Gew.-%, bezogen auf den Zement, zugegeben wird.

15. Verwendung gemäß einem der Ansprüche 1 bis 14, wobei der Verzögerer dem Calciumsulfoaluminat-Belit-Klinker vor oder während des Mahlens zugegeben wird oder wobei der Verzögerer dem Calciumsulfoaluminat-Belit-Zement vor oder während des Mischens mit Wasser zugegeben wird.

16. Verwendung gemäß einem der Ansprüche 1 bis 14, wobei die Aminocarbonsäure oder deren Salz dem Calciumsulfoaluminat-Belit-Klinker vor oder während des Mahlens zugegeben wird und die Carbonsäure oder deren Salz nach dem Mahlen zugegeben wird.

17. Verfahren zur Verzögerung des Abbindens von Calciumsulfoaluminat-Belit-Bindemittel, -Mörtel oder -Beton, umfassend die Zugabe einer Kombination einer Aminopolycarbonsäure oder eines Salzes davon mit einer Carbonsäure, die nur Kohlenstoff-, Wasserstoff- und Sauerstoffatome in ihrem Molekül hat, oder eines Salzes davon als Verzögerer zu einem Calciumsulfoaluminat-Belit-Zement entsprechend der Verwendung gemäß irgendeinem der Ansprüche 1 bis 16.

18. Verfahren gemäß Anspruch 17, wobei der verwendete Verzögerer als Zusatzmittel für die Zugabe zu einem Mörtel oder einem Beton hergestellt wird oder der Verzögerer im trockenen Bindemittel enthalten ist.

19. Verfahren gemäß Anspruch 17, wobei der verwendete Verzögerer dem Calciumsulfoaluminat-Belit-Klinker vor oder während des Mahlens zugegeben wird.

20. Verfahren gemäß Anspruch 17, wobei die Aminocarbonsäure oder deren Salz dem Calciumsulfoaluminat-Klinker vor oder während des Mahlens und die Carbonsäure oder deren Salz nach dem Mahlen zugegeben wird.

21. Calciumsulfoaluminat-Belit-Bindemittel mit kontrolliertem Erstarren, umfassend mindestens 70 Gew.-% eines Calciumsulfoaluminat-Belit-Zements, erhalten aus einem Calciumsulfoaluminat-Belit-Klinker, der mindestens 20 Gew.-% Belit enthält, und einer Kombination aus mindestens einer Aminopolycarbonsäure oder einem Salz davon mit mindestens einer Carbonsäure, die nur Kohlenstoff-, Wasserstoff- und Sauerstoffatome in ihrem Molekül aufweist, oder einem Salz davon, die als Verzögerer gemäß einem der Ansprüche 1 bis 16 verwendet wird.

## Revendications

1. Utilisation d'une combinaison d'un acide aminopolycarboxylique ou d'un sel de celui-ci avec un acide carboxylique comprenant uniquement des atomes de carbone, d'hydrogène, et d'oxygène dans sa molécule ou un sel de celui-ci en tant que retardateur pour des ciments de type sulfoaluminate de calcium-bélite.

2. Utilisation selon la revendication 1, dans laquelle l'acide aminopolycarboxylique ou le sel est l'acide éthylènediamine-tétraacétique, l'acide diéthylènetriamine-pentaacétique, l'acide éthylènediamine-dihydroxyphénylacétique, l'iminodisuccinate de tétrasodium, ou tout mélange de deux ou plusieurs d'entre eux.

3. Utilisation selon la revendication 1 ou 2, dans laquelle l'acide carboxylique ou le sel de celui-ci est un acide carboxylique ou carboxylate comprenant 2 à 8 atomes de carbone, de préférence 2 à 6 atomes de carbone, y compris ceux des groupes acide carboxylique/carboxylate.

4. Utilisation selon l'une quelconque des revendications 1 à 4, dans laquelle le sel d'acide carboxylique est un sel de lithium, de sodium, de potassium, de magnésium, et/ou de calcium.

5. Utilisation selon l'une quelconque des revendications 1 à 3, dans laquelle l'acide carboxylique ou le sel de celui-ci est l'acide citrique, l'acide tartrique, l'acide oxalique, le tartrate de potassium et de sodium, l'acétate de sodium, ou tout mélange de deux ou plusieurs d'entre eux.

6. Utilisation selon l'une quelconque des revendications 1 à 5, dans laquelle un dosage pour le mélange retardateur va de 0,01 à 5 %, préférentiellement de 0,05 à 3 % et le plus préférentiellement de 0,1 à 1,5 %, chacun en poids et par rapport au poids total du ciment sec.

7. Utilisation selon l'une quelconque des revendications 1 à 6, dans laquelle un rapport pondéral de l'acide aminopolycarboxylique ou du sel de celui-ci à l'acide carboxylique ou au sel de celui-ci va de 1:3 à 3:1.

8. Utilisation selon l'une quelconque des revendications 1 à 7, dans laquelle le clinker de type sulfoaluminate de calcium-bélite à partir duquel le ciment de type sulfoaluminate de calcium-bélite est obtenu comprend :
10 à 80 % en poids de ye'elimite, de préférence 20 à 70 % en poids
20 à 70 % en poids de bélite, de préférence 30 à 60 % en poids
0 à 30 % en poids de ferrite, de préférence 5 à 20 % en poids
0 à 30 % en poids de ternésite, de préférence 0 à 20% en poids
0 à 15 % en poids de constituants mineurs, de préférence 0 à 5 % en poids
chacun par rapport au poids total de clinker.

9. Utilisation selon l'une quelconque des revendications 1 à 8, dans laquelle du sulfate de calcium est ajouté sous forme d'anhydrite ou de dihydrate ou de mélanges de ceux-ci, en une quantité permettant d'atteindre jusqu'à 15 % en poids, de préférence jusqu'à 10 % en poids, dans le ciment par rapport au poids total de ciment.

10. Utilisation selon l'une quelconque des revendications 1 à 9, dans laquelle d'autres adjuvants et/ou additifs sont inclus, de préférence un seul ou tout mélange de deux ou plusieurs parmi des agents dispersants, des agents antimousse, des agents entraineurs d'air, des agents réducteurs d'eau, des superplastifiants, des pigments, des matières de charge et des fibres.

11. Utilisation selon l'une quelconque des revendications 1 à 10, dans laquelle le ciment de type sulfoaluminate de calcium-bélite est mélangé avec du ciment Portland, du clinker de ciment Portland broyé, du calcaire, ou tout mélange de ceux-ci.

12. Utilisation selon l'une quelconque des revendications 1 à 11, dans laquelle le ciment de type sulfoaluminate de calcium-bélite est mélangé avec des matériaux cimentaires supplémentaires comme des sous-produits industriels qui contribuent par une réaction hydraulique pouzzolanique ou latente, de préférence du laitier de haut fourneau, des cendres volantes, du schiste bitumineux calciné, ou tout mélange de ceux-ci.

13. Utilisation selon l'une quelconque des revendications 1 à 12, dans laquelle un sulfate de métal alcalin, par exemple du sulfate de sodium, est ajouté en une quantité de 0,1 à 5,0 % en poids par rapport au ciment.

14. Utilisation selon l'une quelconque des revendications 1 à 13, dans laquelle un carbonate de métal alcalin, par exemple du carbonate de lithium, est ajouté en une quantité de 0,005 à 0,1 % en poids, de préférence de 0,01 à 0,05 % en poids, par rapport au ciment.

15. Utilisation selon l'une quelconque des revendications 1 à 14, dans laquelle le retardateur est ajouté au clinker de type sulfoaluminate de calcium-bélite avant ou pendant le broyage ou dans laquelle le retardateur est ajouté au ciment de type sulfoaluminate de calcium-bélite avant ou pendant le mélange avec l'eau.

16. Utilisation selon l'une quelconque des revendications 1 à 14, dans laquelle l'acide aminocarboxylique ou le sel est ajouté au clinker de type sulfoaluminate de calcium-bélite avant ou pendant le broyage et l'acide carboxylique ou le sel est ajouté après le broyage.

17. Procédé pour retarder la prise d'un liant, d'un mortier ou d'un béton de type sulfoaluminate de calcium-bélite, comprenant l'ajout d'une combinaison d'un acide aminopolycarboxylique ou d'un sel de celui-ci avec un acide carboxylique comprenant uniquement des atomes de carbone, d'hydrogène, et d'oxygène dans sa molécule ou le sel en tant que retardateur à un ciment de type sulfoaluminate de calcium-bélite conformément à l'utilisation selon l'une quelconque des revendications 1 à 16.

18. Procédé selon la revendication 17, dans lequel le retardateur utilisé est préparé en tant qu'adjuvant destiné à être ajouté à un mortier ou à un béton ou le retardateur est inclus dans le liant sec.

19. Procédé selon la revendication 17, dans lequel le retardateur utilisé est ajouté au clinker de type sulfoaluminate de calcium-bélite avant ou pendant le broyage.

20. Procédé selon la revendication 17, dans lequel l'acide aminocarboxylique ou le sel est ajouté au clinker de type sulfoaluminate de calcium avant ou pendant le broyage et l'acide carboxylique ou le sel est ajouté après le broyage.

21. Liant de type sulfoaluminate de calcium-bélite à prise contrôlée comprenant au moins 70 % en poids d'un ciment de type sulfoaluminate de calcium-bélite obtenu à partir d'un clinker de type sulfoaluminate de calcium-bélite contenant au moins 20 % en poids de bélite et une combinaison d'au moins un acide aminopolycarboxylique ou sel de celui-ci avec au moins un acide carboxylique comprenant uniquement des atomes de carbone, d'hydrogène et d'oxygène dans sa molécule ou sel de celui-ci utilisé en tant que retardateur selon l'une quelconque des revendications 1 à 16.
